# EUROPÄISCHE PATENTSCHRIFT

(11) **EP 1 721 483 B1**
(45) Veröffentlichungstag und Bekanntmachung des Hinweises auf die Patenterteilung: **26.09.2012**
(21) Anmeldenummer: 05707773.7
(22) Anmeldetag: 14.01.2005
(51) Int. Cl.: H04W 16/18

(54) **VERFAHREN UND ANORDNUNG ZUM ERFASSEN EINER FUNKABDECKUNG**
METHOD AND ARRANGEMENT FOR DETECTING A RADIO COVERAGE
PROCEDE ET DISPOSITIF POUR DETECTER UNE COUVERTURE RADIO

(30) Priorität: 02.03.2004 DE 102004010182
(43) Veröffentlichungstag der Anmeldung: 15.11.2006
(73) Patentinhaber: Siemens Enterprise Communications GmbH & Co. KG, 81379 München (DE)
(72) Erfinder: NIENTIEDT, Robert, 33129 Delbrück (DE)
(74) Vertreter: Fritzsche, Thomas
(86) Internationale Anmeldenummer: PCT/EP2005/050142
(87) Internationale Veröffentlichungsnummer: WO 2005/086515

(56) Entgegenhaltungen:
- EP-A- 1 304 896
- WO-A-02/28136
- WO-A-96/38990
- WO-A-99/33297
- GB-A- 2 347 826

## Beschreibung

Die vorliegende Erfindung bezieht sich auf ein Verfahren und eine Anordnung zum Erfassen einer Funkabdeckung und insbesondere auf ein Verfahren und eine Anordnung zum Erfassen einer Funkabdeckung in einem synchronen Mehrzellen-Mobilfunksystem gemäß dem DECT-Standard.

Mehrzellen-Mobilfunksysteme sind üblicherweise in hierarchischen Strukturen geordnet. Ein Telekommunikationsendgerät, wie beispielsweise ein Mobilteil, eines Teilnehmers kommuniziert hierbei mit einer Basisstation, die die funktechnische Versorgung eines geografischen Gebietes, einer sogenannten Funkzelle übernimmt. Die Basisstationen können wiederum an Vermittlungszentren, beispielsweise einer Kommunikationsanlage, angeschlossen werden, die einen Übergang zu anderen Kommunikationsnetzen ermöglichen. Im Idealfall wird durch eine Basisstation eine Funkzelle mit einer hexagonalen Struktur abgedeckt, wobei die Basisstation üblicherweise im Zentrum der Zelle angeordnet ist. Im Realfall wird jedoch die Ausgestaltung der Netzstruktur von der geografischen Topologie beeinflusst, da Höhen-, Landschafts- oder Bebauungsprofile die Wellenausbreitung einer Basisstation beeinflussen und damit eine regelmäßige Struktur verzerren.

Besonders in Gebäuden, wie beispielsweise Fertigungshallen, wo die Bebauungsprofile die Wellenausbreitung stark beeinflussen, müssen zur Gestaltung und zur Überprüfung des Mobilfunknetzes eine Funkabdeckung bzw. eine ausreichende Funkfeldsausleuchtung regelmäßig erfasst werden, um beispielsweise eine Störung oder eine Unterbrechung einer Telekommunikations-Verbindung insbesondere während eines sogenannten "Handovers" zwischen zwei Funkzellen innerhalb eines Funkbereiches oder einem sogenannten "Roaming" zwischen zwei aus einer Vielzahl von Funkzellen bestehenden Funkbereichen zu verhindern.

Üblicherweise wurde diese Überprüfung einer ausreichenden Funkfeldausleuchtung bzw. Funkabdeckung in einem Mehrzellen-Mobilfunksystem manuell mit einem eigens dafür entwickelten Messkoffer durchgeführt. Genauer gesagt wurde von Messtrupps mit einem mobilen Messgerät der vom Mehrzellen-Mobilfunksystem abzudeckende Bereich zumindest stichprobenartig vermessen und bei einer fehlenden bzw. unzureichenden Funkabdeckung eine Korrektur des Mobilfunksystems durchgeführt. Insbesondere nach baulichen Veränderungen bzw. Erweiterung des Mehrzellen-Mobilfunksystems muss eine derartige Prüfung wiederholt werden, um eine ausreichende Funkfeldausleuchtung zu gewährleisten, wodurch sich jedoch außerordentlich hohe Kosten ergeben.

Aus der EP 1304896 A2 ist ein Verfahren zum automatischen Erfassen einer Funkabdeckung in einem Mehrzellen-Mobilfunksystem bekannt. Eine Vielzahl von Basisstationen steht dabei mit einer Steuereinheit in Verbindung, wobei alle Basisstationen in einen Empfangsbetrieb geschaltet werden und eine jeweilige Feldstärke von örtlich benachbarten befindlichen Basisstationen gemessen wird. Die gemessenen Feldstärkedaten werden anschließend in einer Auswerteeinheit ausgewertet.

Der Erfindung liegt daher die Aufgabe zugrunde, eine Erfassung einer Funkabdeckung weiter zu verbessern und weitere Auswerte-Alternativen zu ermöglichen.

Erfindungsgemäß wird diese Aufgabe hinsichtlich des Verfahrens durch die Maßnahmen des Patentanspruchs 1 und hinsichtlich der Anordnung durch die Merkmale des Patentanspruchs 8 gelöst.

Insbesondere durch die Verwendung eines Mehrzellen-Mobilfunksystems mit einer Vielzahl von Basisstationen, die mit einer Auswerteeinheit in Verbindung stehen, wobei nacheinander alle Basisstationen in eine Mess-Betriebsart geschaltet werden, eine jeweilige Feldstärke von örtlich benachbarten und in einer Normal-Betriebsart befindlichen Basisstationen gemessen wird, und die gemessenen Feldstärkedaten anschließend von der Auswerteeinheit ausgewertet werden, kann eine reale Funkfeldausleuchtung bzw. Funkabdeckung mit ausreichender Genauigkeit und minimalen Kosten insbesondere ohne Personaleinsatz erfasst werden.

Erfindungsgemäß sind die jeweils in Mess-Betriebsart betriebenen Basisstationen in Synchronität zu den in Normal-Betriebsart befindlichen Basisstationen, wodurch neben einer Feldstärke auch eine Qualität der Synchronität zur Erfassung einer Funkabdeckung herangezogen werden kann. Die Erfassung der Funkabdeckung wird dadurch weiter verbessert und ermöglicht weitere Auswerte-Alternativen.

Vorzugsweise wird die Erfassung der Funkabdeckung in vorbestimmten Zeitabständen und insbesondere zyklisch durchgeführt, wobei ein Vergleich eines aktuellen Auswerteergebnisses mit einem oder mehreren vorhergehenden Auswerteergebnissen durchgeführt wird. Auf diese Weise können insbesondere bauliche Veränderungen innerhalb eines Gebäudes, die zu einer veränderten Funkabdeckung führen, in vorgegebenen Zeitabständen erfasst und gegebenenfalls korrigiert werden.

Die Auswerteeinheit steuert hierbei die Basisstationen vorzugsweise automatisch an, wobei auch eine Auswertung der gemessenen Daten vorzugsweise automatisch erfolgt.

Ferner können die gemessenen Feldstärkedaten neben einer eigentlichen Feldstärke und einer zugehörigen Synchronitätsqualität auch eine Basisstations-Kennung aufweisen, wodurch insbesondere in DECT-Systemen mögliche Fehlplanungen durch Anordnung von Basisstationen mit gleichem RFPI-Wert (Radio Fixed Part Identification) zuverlässig verhindert werden kann.

Darüber hinaus kann die Auswerteeinheit auf der Grundlage der gemessenen Feldstärkedaten auch eine geografische Feldstärkekarte erstellen, die weiterhin zur genauen Positionsbestimmung von Mobilteilen innerhalb des Mehrzellen-Mobilfunksystems herangezogen werden kann.

In den weiteren Unteransprüchen sind weitere vorteilhafte Ausgestaltungen der Erfindung gekennzeichnet.

Die Erfindung wird nachstehend an Hand eines Ausführungsbeispiels unter Bezugnahme auf die Zeichnung näher beschrieben.

Es zeigen:
- Figur 1: eine vereinfachte Darstellung eines Mehrzellen-Mobilfunksystems mit einem Funkbereich;
- Figur 2: eine vereinfachte Darstellung einer Mess-Betriebsart im Mobilfunksystem gemäß Figur 1; und
- Figuren 3A bis 3C: vereinfachte Darstellungen sowie eine zugehörige Tabelle für eine falsche und korrekte Planung von sich überlappenden Funkbereichen in einem DECT-Mobilfunksystem.

Die Erfindung wird nachfolgend an Hand eines Mehrzellen-Mobilfunksystems beschrieben, das nach dem DECT-Standard (Digital Enhanced Cordless Telecommunications) ausgelegt ist.

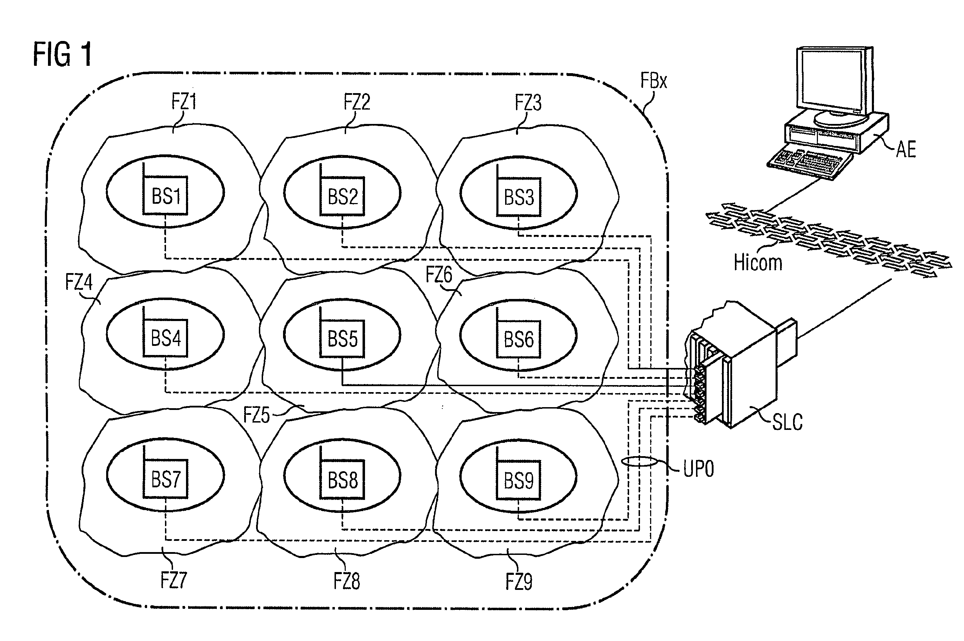

Figur 1 zeigt eine vereinfachte Darstellung eines derartigen DECT-Mehrzellen-Mobilfunksystems, wobei beispielsweise neun Basisstationen BS bis BS9 über eine erste Kommunikationsschnittstelle UP0 an eine Funkvermittlerbaugruppe SLC (Subscriber Line Card) angeschaltet sind. Die Funkvermittlerbaugruppe SLC kann ihrerseits über eine zweite Kommunikationsschnittstelle HICOM an eine Auswerteeinheit AE angeschaltet sein.

Jede Basisstation BS1 bis BS9 dient der funktechnischen Versorgung eines vorbestimmten geografischen Gebietes, welches eine sogenannte Funkzelle FZ1 bis FZ9 darstellt. Die Gesamtheit der Funkzellen FZ1 bis FZ9 stellt einen Funkbereich FBx dar, der einer jeweiligen Funkvermittlerbaugruppe SLC zugeordnet ist. Innerhalb einer Funkvermittlerbaugruppe SLC können maximal 16 Basisstationen zur Realisierung eines gemeinsamen Funkbereichs angeschaltet werden. Ferner gilt die Besonderheit, dass den Funkvermittlerbaugruppen SLC lediglich ein vierstelliger Binärcode als SLC-Kennung zur Verfügung steht, so dass maximal 16 Funkvermittlerbaugruppen SLC mit einer eindeutigen Kennung versehen werden können, während bereits eine siebzehnte Funkvermittlerbaugruppe eine gleiche SLC-Kennung aufweist, wie beispielsweise eine erste Funkvermittlerbaugruppe.

Die erste Kommunikationsschnittstelle UP0 ist beispielsweise eine Pingpong bzw. Burst-Schnittstelle, wobei jedoch auch alternative Schnittstellen verwendet werden können. Die zweite Kommunikationsschnittstelle HICOM wird beispielsweise durch ein privates Kommunikationsnetz oder durch alternative Schnittstellen realisiert. Die Auswerteeinheit AE stellt beispielsweise einen an der zweiten Kommunikationsschnittstelle angeschlossenen PC oder einen über eine weitere Kommunikationsschnittstelle bzw. ein weiteres Netz angeschlossenen externen Server dar und kann sich jedoch auch bereits innerhalb der Funkvermittlerbaugruppe SLC befinden.

Für das problemlose Funktionieren des in Figur 1 dargestellten Mehrzellen-Mobilfunksystems gemäß dem DECT-Standard ist die qualitativ gute Ausleuchtung der zu versorgenden Funkzellen und/oder Funkbereiche von hoher Bedeutung. Bei schlechter Funkfeldausleuchtung bzw. schlechter Funkabdeckung sind Gesprächsabbrüche, Störgeräusche und/oder Nicht-Erreichbarkeit für ein nicht dargestelltes Teilnehmerendgerät bzw. Mobilteil unvermeidlich.

Die Anzahl der Basisstationen werden in einem derartigen Mehrzellen-Mobilfunksystem üblicherweise nach Verkehrswerten und insbesondere einer Funkabdeckung bzw. Funkfeldausleuchtung des Gebäudes/Fläche dimensioniert. Die Topologie dieser Stationen wird in einen Installationsplan eingetragen und ist damit bekannt. Mit diesen Informationen kann zunächst eine theoretische Funkverteilung bzw. Funkabdeckung der Basisstationen berechnet werden, die jedoch von einer realen Funkfeldverteilung üblicherweise stark abweicht.

Zur Erfassung einer derartigen realen Funkfeldverteilung bzw. Funkabdeckung werden erfindungsgemäß nunmehr nacheinander alle Basisstationen des synchronen Mehrzellen-Mobilfunksystems in einen Mess-Betriebsmodus bzw. eine Mess-Betriebsart geschaltet, wobei eine jeweilige Feldstärke von örtlich benachbarten und in einer Normal-Betriebsart befindlichen Basisstationen gemessen wird. Diese gemessenen Feldstärkedaten werden anschließend an die Auswerteeinheit AE weitergegeben und dort an Hand der zusätzlichen Funkfeldstärkewerte eine reale Funkfeldverteilung bzw. Funkabdeckung näherungsweise berechnet.

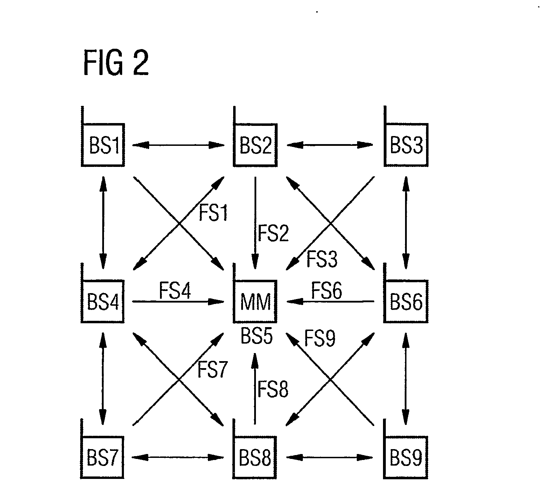

Figur 2 zeigt eine vereinfachte Darstellung zur Veranschaulichung einer derartigen Mess-Betriebsart in einem DECT-Mobilfunksystem gemäß Figur 1, wobei gleiche Bezugszeichen gleiche oder entsprechende Elemente bezeichnen und auf eine wiederholte Beschreibung nachfolgend verzichtet wird.

Gemäß Figur 2 wird beispielsweise eine Basisstation 5 vorübergehend bzw. kurzzeitig in eine Mess-Betriebsart geschaltet, während die weiteren Basisstationen des Mobilfunksystems und insbesondere die örtlich benachbarten Basisstationen BS1 bis BS4 und BS6 bis BS9 der in Mess-Betriebsart befindlichen Basisstation BS5 in einer Normal-Betriebsart betrieben werden. Unter einer Normal-Betriebsart wird hierbei eine Betriebsart verstanden, bei der die Basisstation in üblicher Weise über die zur Verfügung stehenden Kommunikationskanäle mit den anderen Basisstationen oder den nicht dargestellten Mobilteilen in Verbindung steht und sich somit in einer Daten-Sende-/Empfangs-Betriebsart befindet. In der Mess-Betriebsart werden hingegen keine Daten von Basisstationen oder nicht dargestellten Mobilteilen empfangen oder zu diesen gesendet, sondern lediglich eine Messung der von den benachbarten Basistationen empfangenen Signale durchgeführt. Insbesondere wird hierbei eine jeweilige Feldstärke der im Empfangsbereich befindlichen Basisstationen erfasst bzw. gemessen.

Genauer gesagt misst die Basisstation BS5 die an ihrem Ort vorliegende Feldstärke FS1 der Basisstation 1. In gleicher Weise misst sie auch die an ihrem Ort vorliegenden Feldstärken FS2 bis FS4 und FS6 bis FS9 der in ihrem Empfangsbereich liegenden weiteren Basisstationen BS2 bis BS4 und BS6 bis BS9, die beispielsweise örtlich benachbart um die Basisstation BS5 gruppiert sind und in einer Normal-Betriebsart betrieben werden. Diese zusätzlich gemessenen und jeweiligen Basistationen zugeordneten Funkfeldstärkedaten werden anschließend beispielsweise über die Funkvermittlerbaugruppe SLC an die Auswerteeinheit AE gesendet.

Anschließend wird die Basisstation BS5 wieder in ihren Normal-Betriebszustand bzw. in ihre Normal-Betriebsart geschaltet und eine weitere Basisstation des Mehrzellen-Mobilfunksystems in die Mess-Betriebsart gebracht, wobei wiederum ein zusätzlicher Satz von Feldstärkedaten gemessen und an die Auswerteeinheit AE übertragen wird. Nachdem alle Basisstationen des Mobilfunksystems oder eines zu betrachtenden Teilbereichs in eine derartige Mess-Betriebsart geschaltet wurden und alle zugehörigen Feldstärkedaten der Auswerteeinheit AE übermittelt wurden, erfolgt nunmehr die Auswertung dieser zusätzlichen Feldstärkedaten in der Auswerteeinheit AE.

Genauer gesagt wird nunmehr unter Verwendung der zusätzlichen Feldstärkedaten für jeden Messpunkt bzw. jede in Mess-Betriebsart gebrachte Basisstation eine reale Funkfeldverteilung bzw. Funkabdeckung des Mehrzellen-Mobilfunksystems berechnet, wodurch Schwachstellen bzw. eine unzureichende Funkausleuchtung innerhalb des Mobilfunksystems aufgedeckt werden können. Da erfindungsgemäß keine mobilen Messtrupps zum örtlichen Vermessen des Mobilfunksystems notwendig sind, können die Kosten wesentlich reduziert werden.

Obwohl die Basisstationen grundsätzlich manuell in den Mess-Betriebszustand bzw. die Mess-Betriebsart geschaltet werden können, erfolgt diese Umschaltung vorzugsweise automatisch durch die Auswerteeinheit AE.

Die in die Mess-Betriebsart geschalteten Basisstationen befinden sich hierbei vorzugsweise in Synchronität zu den in Normal-Betriebsart befindlichen Basisstationen, wodurch insbesondere bei Verwendung eines Mehrzellen-Mobilfunl-systems gemäß dem DECT-Standard neben den Feldstärkewerten auch ein Synchronitätswert bzw. eine Synchronitätsqualität gemessen und ausgewertet werden kann. Genauer gesagt wird bei DECT beispielsweise über einen sogenannten "Multiframecounter" eine Qualität der Synchronität zwischen sich überlappenden Funkzellen von benachbarten Basisstationen gemessen, wobei die Qualität der Synchronität insbesondere ein Maß für störende Geräusche während eines sogenannten "Handovers" eines nicht dargestellten Mobilteils von einer Funkzelle zu einer weiteren Funkzelle darstellt. Unter Berücksichtigung dieser zusätzlichen Synchronitätswerte bzw. -qualität kann daher die Genauigkeit einer Auswertung für eine reale Funkabcleckung weiter verbessert werden.

Auf diese Weise kann somit eine ausreichende Überlappung der Funkzellen bzw. Funkbereiche innerhalb eines Mehrzollen-Mobilfunksystems sehr genau ermittelt bzw. überprüft werden, um gegebenenfalls entsprechende Gegenmaßnahmen einzuleiten.

Da die Auswerteeinheit die Basisstationen vorzugsweise automatisch ansteuert und die gemessenen Feldstärkedaten, die auch die vorstehend genannten Synchronitätswerte aufweisen können, ebenfalls automatisch ausgewertet werden, ergeben sich wesentliche Kostenersparungen bei der Erfassung einer Funkfeldausleuchtung bzw. Funkabdeckung eines Mehrzellen-Mobilfunksystems.

Zur weiteren Verbesserung und insbesondere zur Erfassung von Veränderungen in der Funkabdeckung beispielsweise durch Baumaßnahmen innerhalb eines Gebäudes oder einer Erweiterung des Mobilfunksystems kann die Erfassung der Funkabdeckung auch in zeitlich vorbestimmten regelmäßigen oder unregelmäßigen Abständen zyklisch durchgeführt werden, wobei ein Vergleich eines aktuellen Auswerteergebnisses mit zumindest einem vorhergehenden Auswerteergebnis durchgeführt wird. Auf diese Weise können Veränderungen in der Funkabdeckung, wie sie beispielsweise durch Baumaßnahmen regelmäßig hervorgerufen werden, rechtzeitig erkannt und entsprechend Gegenmaßnahmen eingeleitet werden.

Ferner können die gemessenen Feldstärkedaten, wie bei DECT üblich, auch eine Basisstations-Kennung aufweisen. Eine derartige Basisstations-Kennung ist beispielsweise der sogenannte RFPI-Wert (Radio Fixed Part Identity), der gemäß DECT-Standard 40 Bit lang ist. In "Private multiple cells" (Ari-Class B) definieren die unteren 8 Bits hierbei die Anzahl (maximal 255) der Basisstationen bzw. "Fixed Parts". In DECT-Mobilfunksystemen mit mehr als 255 Basisstationen dürfen sich daher Basisstationen mit gleichen RFPI-Werten funktechnisch nicht überlappen. Ein Mobilteil würde sich in diesem Fall im Überlappungsbereich in einem undefinierten Bereich befinden, da keine eindeutige Adressierung der Basisstation möglich ist. Erfindungsgemäß kann demzufolge ein derartiger nicht erlaubter Zustand bzw. eine derartige Fehlplanung des Mobilfunksystems sofort erkannt werden, da gemessene Feldstärkedaten mit identischer Basisstations-Kennung wie die in Mess-Betriebsart befindliche Basistation in der Auswerteeinheit beispielsweise einen Warnhinweis oder eine Fehlermeldung hervorrufen würden.

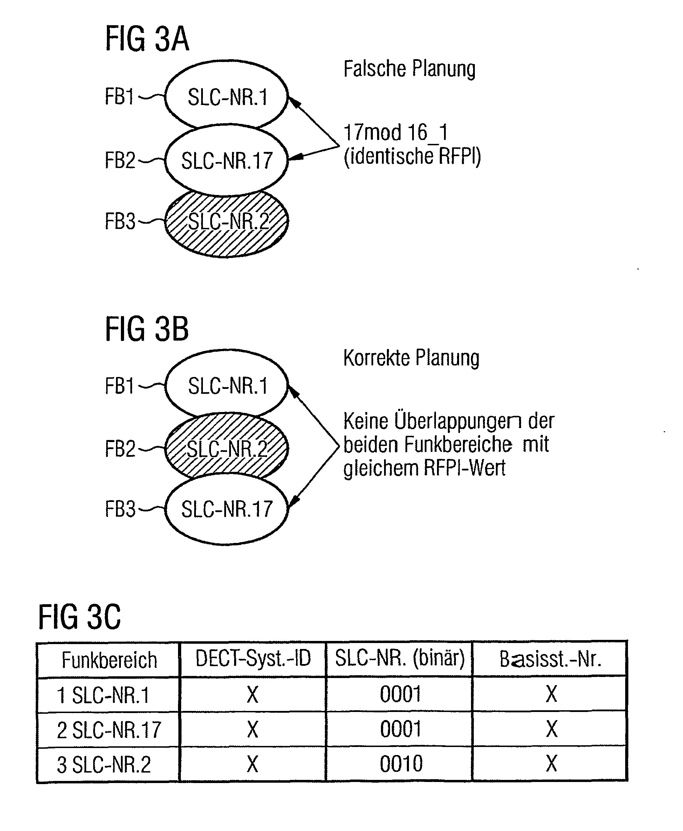

Die Figuren 3A bis 3C zeigen vereinfachte Darstellungen bzw. eine vereinfachte Tabelle für diesen insbesondere in DECT-Mobilfunksystemen für "Private multiple cells" auftretenden Fall.

Gemäß Figur 3A kann bei einer falschen Planung bzw. Erweiterung des Mehrzellen-Mobilfunksystems beispielsweise ein Funkbereich FB1 mit einer Funkvermittlerbaugruppennummer SLC-Nr. 1 beispielsweise im Überlappungsbereich des Funkbereichs 2 mit einer Funkvermittlerbaugruppennummer SLC-Nr. 17 liegen. Da aufgrund des beschränkten SLC-Binärcodes gemäß Figur 3C lediglich 4 Bits zur Identifizierung der Funkvermittlerbaugruppen zur Verfügung stehen, sind die Funkbereiche FB1 und FB2 nicht eindeutig voneinander zu unterscheiden, weshalb ein im Überlappungsbereich dieser Funkbereiche (bzw. nicht dargestellter Funkzellen) liegendes Mobilteil identische RFPI-Werte von unterschiedlichen Basistationen empfängt, was zu einer Fehlfunktion führt.

Gemäß der vorliegenden Erfindung kann ein derartiger Zustand bzw. eine derartige falsche Planung oder Erweiterung des Mobilfunksystems sofort erkannt werden, da zumindest eine der in die Mess-Betriebsart geschaltete Basisstation ein Feldstärkedatum mit einer Basisstations-Kennung messen würde, welches die gleiche RFPI-Kennung aufweist wie sie selbst.

Eine derartige Fehlplanung kann demzufolge von der Auswerteeinheit unverzüglich erkannt und beispielsweise gemäß Figur 3B korrigiert werden, wobei beispielsweise dem Funkbereich 2 nunmehr eine SLC-Nr. 2 zugewiesen wird. Vorzugsweise wird eine derartige Veränderung bzw. Umkonfiguration des Mobilfunksystem bzw. der Funkabdeckung in Abhängigkeit vom Auswerteergebnis unmittelbar von der Auswerteeinheit AE durchgeführt. Demzufolge kann die Auswerteeinheit AE bei Erkennen einer Fehlplanung gemäß Figur 3A die Funkvermittlerbaugruppe des Funkbereichs FB2 beispielsweise derart umprogrammieren, dass sie nunmehr die RFPI-Kennung bzw. SLC-Nr. 2 aufweist.

Neben einer derartigen Korrektur bzw. Neu-Konfiguration der RFPI-Werte von sich überlappenden Funkbereichen bzw. zugehörigen Funkvermittlerbaugruppen SLC, kann die Funkabdeckung grundsätzlich auch hinsichtlich ihrer Feldstärkewerte in Abhängigkeit vom Auswerteergebnis verändert werden. Beispielsweise könnten Basisstationen mit variabler Sendeleistung in einem Bereich mit verminderter Funkfeldausleuchtung in einer Betriebsart mit erhöhter Sendeleistung betrieben werden, um beispielsweise bauliche Veränderungen zumindest teilweise zu kompensieren.

Obwohl die Basisstationen vorzugsweise zwischen einer Normal-Betriebsart und einer Mess-Betriebsart hin- und hergeschaltet werden, kann optional eine als Messpunkt dienende Basisstation auch zusätzlich zu ihrer Normal-Betriebsart in eine Mess-Betriebsart geschaltet werden, wobei sie beide Betriebsarten gleichzeitig ausführt. Aufgrund der gleichzeitigen Betriebsarten ergeben sich hierbei jedoch üblicherweise Einschränkungen für diese Betriebsart, weil nicht alle Timeslots für den Mess- und Normal-Betrieb zur Verfügung stehen.

Neben der Erfassung einer Funkabdeckung bzw. einer ausreichenden Funkfeldausleuchtung in einem Mehrzellen-Mobilfunksystem kann die Auswerteeinheit auf der Grundlage der übermittelten Feldstärkedaten ferner sogenannte Feldstärkekarten zur Positionsbestimmung von im Mobilfunksystem befindlichen Mobilteilen erstellen. Genauer gesagt können durch Überlagerung der Installationspläne mit den ausgewerteten gemessenen Feldstärkedaten sehr genaue, z.B. geografische, Feldstärkekarten für ein jeweiliges Mobilfunksystem erstellt werden, welche unter Auswertung der von Mobilteilen übermittelten Mobilteil-Feldstärkedaten zur hochgenauen Positionsbestimmung der Mobilteile herangezogen werden können.

Auf diese Weise kann nur mit Hilfe der bereits installierten Basisstationen eine reale Funkabdeckung bzw. Funkfeldausleuchtung in einem Mehrzellen-Mobilfunksystem schnell und kostengünstig erfasst bzw. ermittelt werden. Ferner können auf diese Weise eine Funkabdeckung in Mobilfunksystemen in vorbestimmten Zeitabständen kontrolliert und optimiert werden. Insbesondere kann in DECT-Mobilfunksystemen eine RFPI-Kollision zuverlässig verhindert und das Mobilfunksystem automatisch angepasst werden.

Die Erfindung wurde vorstehend an Hand eines Mehrzellen-Mobilfunksystems gemäß dem DECT-Standard beschrieben. Sie ist jedoch nicht darauf beschränkt und umfasst in gleicher Weise auch alternative Mehrzellen-Mobilfunksysteme.

## Patentansprüche

1. Verfahren zum Erfassen einer Funkabdeckung in einem Mehrzellen-Mobilfunksystem mit einer Vielzahl von Basisstationen (BS1 bis BS9), die mit einer Auswerteeinheit (AE) in Verbindung stehen,
wobei nacheinander alle Basisstationen (BS1 bis BS9) in eine Mess-Betriebsart geschaltet werden, in der eine jeweilige Feldstärke (FS1 bis FS4, FS6 bis FS9) von örtlich benachbarten und in einer Normal-Betriebsart, bei der die Basisstation (BS1 bis BS4, BS6 bis BS9) über zur Verfügung stehende Kommunikationskanäle mit den anderen Basisstationen (BS1 bis BS4, BS6 bis BS9) oder Telekommunikationsendgeräten in Verbindung steht, befindlichen Basisstationen (BS1 bis BS4, BS6 bis BS9) gemessen wird,
**dadurch gekennzeichnet,**
**dass** die jeweils in die Mess-Betriebsart geschaltete Basisstation (BS5) in Synchronität zu den in Normal-Betriebsart befindlichen Basisstationen (BS1 bis BS4, BS6 bis BS9) ist, wobei eine Qualität der Synchronität, die beispielsweise gemessen wird über einen "Multiframecounter" zwischen sich überlappenden Funkzellen von benachbarten Basisstationen (BS1 bis BS9), gemessen wird, und
**dass** die jeweils gemessenen Feldstärkedaten und die gemessene Qualität der Synchronität an die Auswerteeinheit (AE) gesendet und dort ausgewertet werden.

2. Verfahren nach Patentanspruch 1,
**dadurch gekennzeichnet,**
**dass** die Erfassung der Funkabdeckung zyklisch durchgeführt wird, wobei ein Vergleich eines aktuellen Auswerteergebnisses mit zumindest einem vorhergehenden Auswerteergebnis erfolgt.

3. Verfahren nach einem der Patentansprüche 1 oder 2,
**dadurch gekennzeichnet,**
**dass** die Auswerteeinheit (AE) die Basisstationen automatisch ansteuert und die gemessenen Feldstärkedaten automatisch auswertet.

4. Verfahren nach einem der Patentansprüche 1 bis 3,
**dadurch gekennzeichnet,**
**dass** die gemessenen Feldstärkedaten eine Basisstations- Kennung aufweisen.

5. Verfahren nach einem der Patentansprüche 1 bis 4,
**dadurch gekennzeichnet,**
**dass** die Auswerteeinheit (AE) das Mobilfunksystem in Abhängigkeit vom Auswerteergebnis verändert.

6. Verfahren nach einem der Patentansprüche 1 bis 5,
**dadurch gekennzeichnet,**
**dass** die Auswerteeinheit (AE) Feldstärkekarten zur Positionsbestimmung von Mobilteilen erstellt.

7. Verfahren nach einem der Patentansprüche 1 bis 6,
**dadurch gekennzeichnet,**
**dass** das Mehrzellen-Mobilfunksystem gemäß dem DECT-Standard ausgelegt ist.

8. Anordnung zum Erfassen einer Funkabdeckung in einem Mehrzellen-Mobilfunksystem mit einer Vielzahl von Basisstationen, die mit einer Auswerteeinheit (AE) in Verbindung stehen, wobei zumindest eine Basi.sstation (BS5) derart eingerichtet ist, dass sie in einer Mess-Betriebsart betreibar ist, in der eine jeweilige Feldstärke (FS1 bis FS4, FS6 bis FS9) von örtlich benachbarten Basisstationen messbar ist, die in einer Normal-Betriebsart, bei der die Basisstation (BS1 bis BS4, BS6 bis BS9) über zur Verfügung stehende Kommunikationskanäle mit den anderen Basisstationen (BS1 bis BS4, BS6 bis BS9) oder Telekommunikationsendgeräten in Verbindung steht, betrieben sind,
**dadurch gekennzeichnet,**
**dass** die in der Mess-Betriebsart betriebene Basisstation (BS5) derart eingerichtet ist, dass sie in Synchronität zu den in Normal-Betriebsart betriebenen Basisstationen (BS1 bis BS4, BS6 bis BS9) sein kann, wobei eine Qualität der Synchronität, die beispielsweise messbar ist über einen "Multiframecounter" zwischen sich überlappenden Funkzellen von benachbarten Basisstationen (BS1 bis BS9), messbar ist, und
**dass** die Auswerteeinheit (AE) derart eingerichtet ist, dass die jeweils gemessenen Feldstärkedaten und die gemessene Qualität der Synchronität empfangbar und auswertbar sind.

9. Anordnung nach Patentanspruch 8,
**dadurch gekennzeichnet,**
**dass** sie derart eingerichtet ist, dass die Erfassung der Funkabdeckung zyklisch erfolgen kann, wobei ein Vergleich eines aktuellen Auswerteergebnisses mit zumindest einem vorhergehenden Auswerteergebnis durchführbar ist.

10. Anordnung nach einem der Patentansprüche 8 oder 9,
**dadurch gekennzeichnet,**
**dass** die gemessenen Feldstärkedaten eine Basisstations-Kennung aufweisen.

11. Anordnung nach einem der Patentansprüche 8 bis 10,
**dadurch gekennzeichnet,**
**dass** die Auswerteeinheit (AE) derart eingerichtet ist, dass das Mobilfunksystem in Abhängigkeit vom Auswerteergebnis veränderbar ist.

12. Anordnung nach einem der Patentansprüche 8 bis 11,
**dadurch gekennzeichnet,**
**dass** die Auswerteeinheit (AE) derart eingerichtet ist, dass Feldstärkekarten zur Positionsbestimmung von Mobilteilen erstellbar sind.

13. Anordnung nach einem der Patentansprüche 8 bis 12,
**dadurch gekennzeichnet,**
**dass** das Mehrzellen-Mobilfunksystem gemäß dem DECT-Standard ausgelegt ist.

## Claims

1. A method for detecting a radio coverage in a multicellular mobile radio system having a plurality of base stations (BS1 to BS9) which are connected to an evaluating unit (AE), with all base stations (BS1 to BS9) being successively switched to a measuring operating mode in which is measured a respective field strength (FS1 to FSA, FS6 to FS9) of locally neighbouring base stations (BS1 to BS4, BS6 to BS9) which are in a normal operating mode in which the base station (BS1 to BS4, BS6 to BS9) is connected via available communication channels to the other base stations (BS1 to BS4, BS6 to BS9) or telecommunication terminals, wherein the base station (BS5) that is switched to the measuring operating mode is in synchronicity with the base stations (BS1 to BS4, BS6 to BS9) switched in normal operating mode, a quality of the synchronicity, which for example is measured by a "multiframe counter" between overlapping radio cells of neighbouring base stations (BS1 to BS9), being measured, and wherein the respectively measured field strength data and the measured quality of the synchronicity are sent to the evaluating unit (AE) where they are evaluated.

2. A method according to claim 1 wherein the detecting of the radio coverage is carried out cyclically, with a comparison being carried out of a current evaluation result with at least one previous evaluation result.

3. A method according to any one of claims 1 or 2 wherein the evaluating unit (AE) automatically controls the base stations and automatically evaluates the measured field strength data.

4. A method according to any one of claims 1 to 3 wherein the measured field strength data exhibit a base station identifier.

5. A method according to any one of claims 1 to 4 wherein the evaluating unit (AE) alters the mobile radio system as a function of the evaluation result.

6. A method according to any one of claims 1 to 5, wherein the evaluating unit (AE) creates field strength maps for determining the position of mobile units.

7. A method according to any one of claims 1 to 6 wherein the multicellular mobile radio system is configured according to the DECT standard.

8. An arrangement for detecting a radio coverage in a multicellular mobile radio system having a plurality of base stations connected to an evaluating unit (AE), with at least one base station (BS5) being configured so that it can be operated in a measuring operating mode in which is measurable a respective field strength (FS1 to PS4, FS6 to FS9) of locally neighbouring base stations which are operated in a normal operating mode in which the base station (BS1 to BS4, BS6 to BS9) is connected via available communication channels to the other base stations (BS1 to BS4, BS6 to BS9) or telecommunication terminals, wherein the base station (BS5) that is operated in the measuring operating mode is configured such that it can be in synchronicity with the base stations (BS1 to BS4, BS6 to BS9) operated in normal operating mode, with a quality of the synchronicity which can for example be measured with a "multiframe counter" between overlapping radio cells of neighbouring base stations (BS1 to BS9) being measurable, and wherein the evaluating unit (AE) is configured such that the respectively measured field strength data and the measured quality of the synchronicity can be received and evaluated.

9. An arrangement according to claim 8 wherein it is configured such that the detecting of the radio coverage can be effected cyclically, it being possible to compare a current evaluation result with at least one previous evaluation result.

10. An arrangement according to any one of claims 8 or 9
wherein the measured field strength data exhibit a base station identifier.

11. An arrangement according to any one of claims 8 to 10
wherein the evaluating unit (AE) is configured such that the mobile radio system can be changed as a function of the evaluation result.

12. An arrangement according to any one of claims 8 to 11
wherein the evaluation unit (AE) is configured such that field strength maps for determining the position of mobile units can be created.

13. An arrangement according to any one of claims 8 to 12
wherein the multicellular mobile radio system is configured according to the DECT standard.

## Revendications

1. Procédé servant à détecter une couverture radio dans un système de radiocommunication multicellulaire doté d'une pluralité de stations de base (BS1 à BS9), qui se trouvent en liaison avec une unité d'évaluation (AE), sachant que toutes les stations de base (BS1 à BS9) sont commutées les unes après les autres dans un mode de mesure, dans lequel on mesure une intensité de champ (FS1 à FS4, FS6 à FS9) respective de stations de base (BS1 à BS4, BS6 à BS9) se trouvant à proximité spatialement et dans un mode normal, dans le cadre duquel la station de base (BS1 à BS4, BS6 à BS9) se trouve en liaison avec les autres stations de base (BS1 à BS4, BS6 à BS9) ou avec des appareils terminaux de télécommunication par l'intermédiaire de canaux de communication disponibles, **caractérisé en ce**
**que** la station de base (BS5) commutée respectivement dans le mode de mesure est synchrone avec les stations de base (BS1 à BS4, BS6 à BS9) se trouvant dans le mode normal, sachant qu'on mesure une qualité de la synchronicité, mesurée par exemple par l'intermédiaire d'un compteur de trames multiples entre des cellules se chevauchant de stations de base voisines (BS1 à BS9), et
en ce que les données d'intensité de champ respectivement mesurées et la qualité de la synchronicité mesurée sont envoyées à l'unité d'évaluation (AE) et y sont évaluées.

2. Procédé selon la revendication 1,
**caractérisé en ce**
**que** la détection de la couverture radio est réalisée de manière cyclique, sachant qu'une comparaison entre un résultat d'évaluation du moment et au moins un résultat d'évaluation précédent est effectuée.

3. Procédé selon l'une quelconque des revendications 1 ou 2,
**caractérisé en ce**
**que** l'unité d'évaluation (AE) commande de manière automatique les stations de base et évalue de manière automatique les données d'intensité de champ mesurées.

4. Procédé selon l'une quelconque des revendications 1 à 3,
**caractérisé en ce**
**que** les données d'intensité de champ mesurées présentent une identification de station de base.

5. Procédé selon l'une quelconque des revendications 1 à 4,
**caractérisé en ce**
**que** l'unité d'évaluation (AE) modifie le système de radiocommunication en fonction du résultat d'évaluation.

6. Procédé selon l'une quelconque des revendications 1 à 5,
**caractérisé en ce**
**que** l'unité d'évaluation (AE) établit des cartes d'intensité de champ par rapport à la détermination de position de parties mobiles.

7. Procédé selon l'une quelconque des revendications 1 à 6,
**caractérisé en ce**
**que** le système de radiocommunication multicellulaire est configuré selon la norme DECT.

8. Ensemble servant à détecter une couverture radio dans un système de radiocommunication multicellulaire comportant une pluralité de stations de base, qui se trouvent en liaison avec une unité d'évaluation (AE), sachant qu'au moins une station de base (BS5) est installée de telle manière qu'elle peut fonctionner dans un mode de mesure, dans lequel une intensité de champ respective (FS1 à FS4, FS6 à FS9) peut être mesurée par des stations de base voisines spatialement, lesquelles fonctionnent dans un mode normal, dans le cadre duquel la station de base (BS1 à BS4, BS6 à BS9) se trouve en liaison avec les autres stations de base (BS1 à BS4, BS6 à BS9) ou avec d'autres appareils terminaux de télécommunication par l'intermédiaire de canaux de communication disponibles,
**caractérisé en ce**
**que** la station de base (BS5) fonctionnant dans le mode de mesure est installée de telle manière qu'elle peut être synchrone avec les stations de base (BS1 à BS4, BS6 à BS9) fonctionnant dans le mode normal, sachant qu'une qualité de la synchronicité peut être mesurée, laquelle peut être mesurée par exemple par l'intermédiaire d'un compteur de trames multiples entre des cellules se chevauchant de stations de base (BS1 à BS9) voisines, et
en ce que l'unité d'évaluation (AE) est installée de telle manière que les données d'intensité de champ respectivement mesurées et la qualité mesurée de la synchronicité peuvent être reçues et évaluées.

9. Ensemble selon la revendication 8,
**caractérisé en ce**
**que** ledit ensemble est installé de telle manière que la détection de la couverture radio peut s'effectuer de manière cyclique, sachant qu'une comparaison entre un résultat d'évaluation du moment et au moins un résultat d'évaluation précédent peut être réalisée.

10. Ensemble selon l'une quelconque des revendications 8 ou 9,
**caractérisé en ce**
**que** les données d'intensité de champ mesurées présentent une identification de station de base.

11. Ensemble selon l'une quelconque des revendications 8 à 10,
**caractérisé en ce**
**que** l'unité d'évaluation (AE) est installée de telle manière que le système de radiocommunication peut être modifié en fonction du résultat d'analyse.

12. Ensemble selon l'une quelconque des revendications 8 à 11,
**caractérisé en ce**
**que** l'unité d'évaluation (AE) est installée de telle manière que des cartes d'intensité de champ peuvent être établies par rapport à la détermination de position de pièces mobiles.

13. Ensemble selon l'une quelconque des revendications 8 à 12,
**caractérisé en ce**
**que** le système de radiocommunication multicellulaire est configuré selon la norme DECT.
